# FASCICULE DE BREVET EUROPEEN

(11) **EP 2 406 790 B1**
(45) Date de publication et mention de la délivrance du brevet: **06.11.2013**
(21) Numéro de dépôt: 10707291.0
(22) Date de dépôt: 09.03.2010
(51) Int. Cl.: G21C 3/38, G21F 5/008, G21F 5/12

(54) **ÉTUI DE STOCKAGE DE COMBUSTIBLE NUCLÉAIRE USAGÉ À FERMETURE FACILITÉE**
BEHÄLTER ZUR LAGERUNG VON AUFGEBRAUCHTEM KERNBRENNSTOFF MIT ERLEICHTERTEM VERSCHLIESSEN
CONTAINER FOR STORING SPENT NUCLEAR FUEL WITH FACILITATED CLOSURE SEALING

(30) Priorité: 11.03.2009 FR 0951519
(43) Date de publication de la demande: 18.01.2012
(73) Titulaire: Commissariat à l'Énergie Atomique et aux Énergies Alternatives, 75015 Paris (FR)
(72) Inventeur: ARGOUD, Jean-Claude, F-38330 Montbonnot (FR)
(74) Mandataire: Ilgart, Jean-Christophe
(86) Numéro de dépôt international: PCT/EP2010/052951
(87) Numéro de publication internationale: WO 2010/102990

(56) Documents cités:
- EP-A- 0 019 544
- FR-A- 1 328 540
- FR-A- 1 339 587
- FR-A- 1 408 832
- FR-A- 2 806 828
- FR-A- 2 896 614
- GB-A- 910 902
- US-A1- 2004 020 919

## Description

### DOMAINE TECHNIQUE ET ART ANTÉRIEUR

La présente invention se rapporte à un étui de stockage de déchets nucléaires usés, plus particulièrement de combustibles nucléaires usés.

Dans le cadre de la gestion des combustibles irradiés, après leur utilisation en réacteur, ceux-ci subissent une étape de refroidissement en piscine dans un bâtiment, dit bâtiment combustible, qui se trouve généralement à côté du bâtiment réacteur.

A la fin de cette étape de refroidissement, les combustibles irradiés sont retirés de la piscine, puis évacués vers un lieu d'entreposage en attente d'un exutoire définitif qui peut être soit le retraitement, soit le stockage géologique.

L'étape de refroidissement en piscine est d'une durée limitée du fait de la capacité réduite des piscines de refroidissement.

Dans ce cadre, il est alors envisagé de conditionner les combustibles irradiés dans des étuis formant la première barrière de confinement, chaque étui étant lui-même disposé dans un container formant une deuxième barrière de confinement et assurant la tenue mécanique de l'ensemble. Ce container est destiné au transport de l'étui vers son lieu d'entreposage provisoire. Ensuite, l'étui est retiré du container stocké dans une structure adaptée.

L'étui comporte un corps cylindrique à section circulaire, un fond soudé à une extrémité du corps.

Après la mise en place du combustible dans l'étui, un bouchon est soudé sur l'extrémité libre du corps, ce bouchon assurant une fermeture étanche de l'étui et formant également un moyen de préhension pour déplacer l'étui.

Les documents US 2004/0020919 A1 et FR 2 806 828 A1 divulguent la fermeture d'une telle étui par soudage.

Le soudage du bouchon sur le corps est effectué par apport de fil. Par ailleurs, il nécessite de mettre en oeuvre un dispositif de soudage relativement complexe puisqu'il doit prendre une orientation particulière pour assurer la réalisation d'une soudure entre la périphérie du bouchon et le corps de l'étui.

En outre, la soudure doit être suffisante pour permettre de soulever l'étui chargé par le bouchon.

C'est par conséquent un but de la présente invention d'offrir un étui destiné à contenir du combustible usé dont la fermeture est facilitée.

### EXPOSÉ DE L'INVENTION

Le but précédemment énoncé est atteint par un étui muni d'un corps cylindrique à section circulaire, d'un fond obturant une première extrémité longitudinale dudit corps et un couvercle destiné à obturer une deuxième extrémité longitudinale dudit corps, ladite deuxième extrémité longitudinale comportant une bride faisant saillie de la surface interne du corps et bordant la deuxième extrémité et destinée à former un appui pour le couvercle, le couvercle étant destiné à être soudé sur la bride.

Grâce à l'invention, l'immobilisation du bouchon sur le corps ne s'effectue pas par soudage direct du bouchon sur le corps, mais du bouchon sur la bride, la zone de soudage est alors décalée radialement vers l'axe du corps, le dispositif de soudage n'a alors plus besoin d'être apte à avoir une orientation complexe, puisque la zone de soudage est facilement accessible.

En d'autres termes, l'invention prévoit de décaler radialement vers l'intérieur de l'étui la zone de soudage du bouchon de sorte à rendre cette zone plus accessible à des moyens de soudage, facilitant la réalisation de la soudure et simplifiant les moyens de soudage.

On prévoit avantageusement que la surface intérieure de la bride comporte une forme en gradin correspondant à un profil périphérique extérieur du bouchon. Ainsi, le bouchon repose sur la bride, et l'apport de matière pour la soudure n'est plus requis.

De manière avantageuse, on prévoit d'utiliser un deuxième bouchon formant principalement un moyen de manutention de l'étui, le premier bouchon formant la barrière étanche. Pour cela, le premier bouchon est disposé en retrait à l'intérieur du corps, par rapport à l'extrémité ouverte du corps, le deuxième bouchon étant solidarisé sur le corps de sorte à recouvrir le premier bouchon.

La présente invention a alors principalement pour objet un étui pour confiner de la matière nucléaire usagée comportant une virole d'axe longitudinal obturée à une première extrémité longitudinale par un fond et une deuxième extrémité longitudinale libre par laquelle l'étui est destiné à être chargé, un bouchon destiné à obturer la deuxième extrémité longitudinale libre de manière étanche au moyen d'une soudure réalisée au niveau d'une zone de soudure, ladite zone de soudure étant décalée radialement vers l'intérieur de l'étui, par rapport à la face interne de la virole, ledit étui comportant une bride en saillie de la face intérieure de la virole du côté de la deuxième extrémité longitudinale libre, le bouchon ayant au moins un diamètre extérieur sensiblement égal à au moins un diamètre intérieur de la bride, ledit bouchon étant destiné à être soudé sur ladite bride.

La bride est avantageusement soudée sur la face intérieure de la virole.

Le décalage radial peut être obtenu au moyen d'une bride fixée sur la face intérieure de la virole du côté de la deuxième extrémité longitudinale libre, le bouchon ayant au moins un diamètre extérieur sensiblement égal à au moins un diamètre intérieur de la bride, ledit bouchon étant destiné à être soudé sur ladite bride.

La bride comporte avantageusement une première section de plus grand diamètre intérieur et une deuxième section de plus petit diamètre intérieur raccordées par une surface annulaire formant un épaulement sensiblement orthogonal à l'axe longitudinal, le bouchon comportant un profil extérieur correspondant au profil intérieur de la bride, de sorte que le bouchon repose sur l'épaulement.

On peut prévoir avantageusement que l'étui comporte des moyens de manutention de l'étui distincts du bouchon, lesdits moyens étant fixés à la virole au niveau de l'extrémité longitudinale libre de la virole, la bride étant fixée dans la virole en retrait de l'extrémité longitudinale libre de la virole.

Les moyens de manutention sont, par exemple formés par un couvercle muni en son centre d'un élément de préhension. Le couvercle peut avantageusement comporter un rebord d'épaisseur proche de l'épaisseur de l'extrémité longitudinale libre de la virole de sorte à permettre une soudure du couvercle sur la virole sans apport de fil.

De manière avantageuse, l'étui selon l'invention peut comporter des moyens de calage du chargement, lesdits moyens de calage étant rapportés à l'intérieur de l'étui.

Dans le cas où l'étui est de section circulaire, les moyens de calage peuvent être formés par un fourreau dont la longueur est sensiblement égale à la longueur intérieure de l'étui et dont la section transversale est un carré, la longueur des diagonales dudit carré étant sensiblement égale au diamètre intérieur de l'étui.

Le fourreau peut également comporter des moyens pour évacuer la chaleur émise par le chargement.

Les moyens d'évacuation de la chaleur comportent par exemple des ailettes s'étendant longitudinalement au moins sur une partie des faces extérieures du fourreau dans la direction de la plus grande dimension.

Le bouchon comporte avantageusement un premier et un deuxième raccord permettant la vidange de l'étui, le balayage avec de l'air de l'intérieur de celui-ci et sa mise sous pression. Un tuyau de vidange disposé à l'intérieur de l'étui peut être prévu, ledit tuyau comportant une première extrémité libre disposée dans le fond de l'étui et une deuxième extrémité raccordée à un des raccords permettant l'aspiration de l'eau contenue dans l'étui.

La présente invention a également pour objet un procédé de chargement et de fermeture d'un étui selon la présente invention, comportant les étapes :
- mise en place du chargement à l'intérieur de l'étui,
- mise en place du bouchon dans la bride,
- soudage du bouchon sur la bride sans apport de matière.

Le procédé de chargement et de fermeture peut également comporter l'étape ultérieure de mise en place des moyens de préhensions sur l'extrémité libre de la virole et soudage de ceux-ci sur la virole.

### BRÈVE DESCRIPTION DES DESSINS

La présente invention sera mieux comprise à l'aide de la description qui va suivre et des dessins en annexes sur lesquels :
- la figure 1 est une vue en coupe longitudinale d'un exemple de réalisation d'un étui selon la présente invention, le combustible usagé n'étant pas représenté,
- les figures 2A et 2B sont des vues de détail de la figure 1,
- la figure 2C est une vue agrandie de l'extrémité libre de l'étui de la figure 1,
- les figures 3A et 3B sont des vues en perspective de moyens de calage pouvant être disposés dans l'étui selon la présente invention,
- la figure 4 est une vue en coupe transversale de la figure 1 le long du plan A-A.

### EXPOSÉ DÉTAILLÉ DE MODES DE RÉALISATION PARTICULIERS

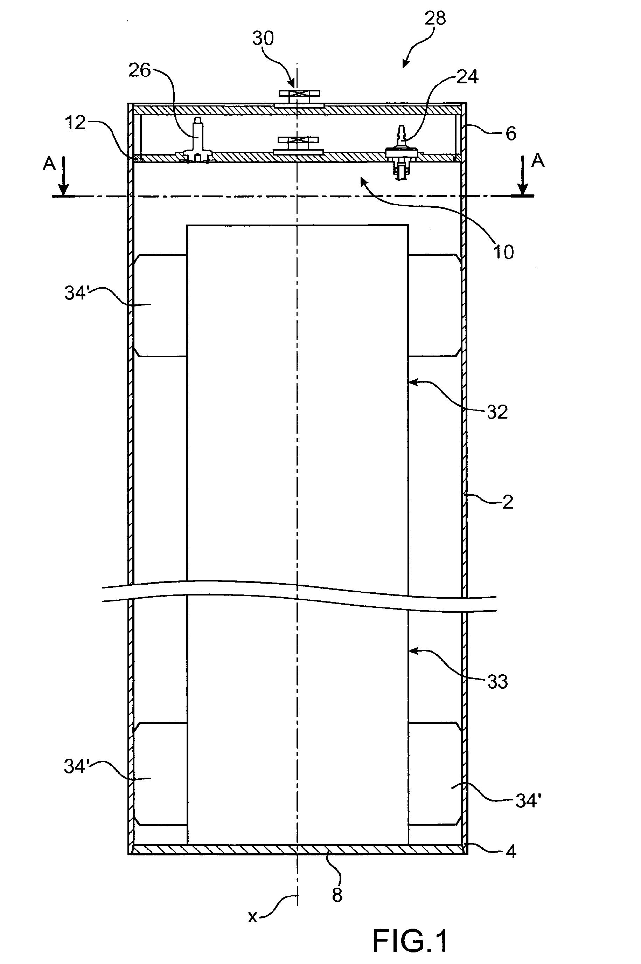

Sur la figure 1, on peut voir un exemple de réalisation d'un étui selon la présente invention comportant une virole cylindrique 2 à section circulaire d'axe X, réalisée par exemple en acier inox. La virole 2 comporte des première 4 et deuxième 6 extrémités longitudinales. La première extrémité 4 de la virole 2 est obturée par une plaque 8 formant le fond de l'étui. Cette plaque 8 est fixée sur la virole 2 par exemple par soudage. On peut également prévoir de réaliser la plaque 8 et la virole 2 d'un seul tenant, par exemple par fluotournage.

La deuxième extrémité longitudinale 6 forme l'extrémité de chargement de l'étui et est destinée à être obturée de manière étanche par un bouchon 10, le bouchon 10 étant mis en place lorsque l'étui est chargé.

Selon la présente invention, une bride intercalaire 12 est prévue au niveau de la deuxième extrémité 6 de la virole 2 sur laquelle est fixé le bouchon 10.

La bride intercalaire 12 est en forme d'anneau fixé sur la face intérieure de la virole 2 au niveau de la deuxième extrémité longitudinale 6.

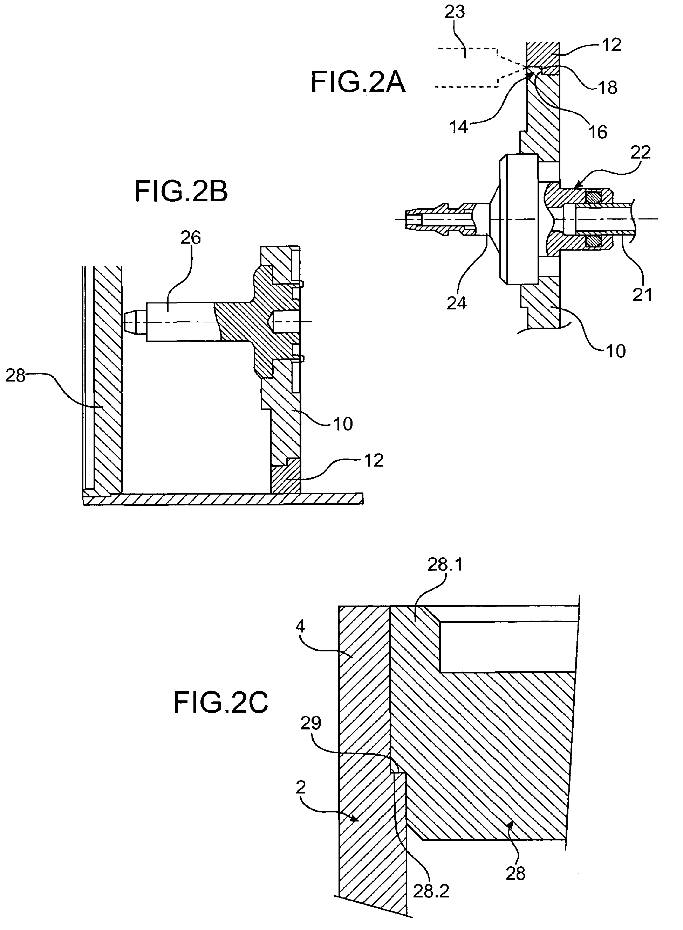

La bride 12 est plus particulièrement visible sur les figures 2A et 2B.

La bride 12 est soudée à la face intérieure de la virole 2.

De manière avantageuse, la bride 12 comporte un profil intérieur 14 en forme de gradin formé par une première portion de plus grand diamètre intérieur et une deuxième portion de plus petit diamètre intérieur, lesdites portions étant raccordées par une surface annulaire 16 orthogonale à l'axe X, orientée vers l'extérieur de l'étui et destinée à former un appui pour le bouchon.

La périphérie extérieure du bouchon 10 comporte un profil extérieur correspondant à celui de la bride 12. La périphérie extérieure comporte donc une première portion de plus grand diamètre extérieur et une deuxième portion de plus petit diamètre extérieur raccordées par une surface annulaire 18 formant épaulement destiné à reposer sur la surface annulaire 16. Le diamètre de la portion de plus grand diamètre extérieur du bouchon est sensiblement égal à celui de la portion de plus grand diamètre intérieur de la bride, et le diamètre de la portion de plus petit diamètre extérieur du bouchon est sensiblement égal à celui de la portion de plus petit diamètre intérieur de la bride.

Selon la présente invention, lors de la fermeture de l'étui le bouchon 10 est soudé sur la bride 12 au niveau du contact entre les contours externes des portions de plus grand diamètre intérieur et extérieur de la bride 12 et du bouchon 10 respectivement.

Grâce à la présente invention, les moyens de soudage 23 (représentés en pointillés sur la figure 2B) à mettre en oeuvre sont plus simples. En effet ils n'ont pas besoin de prendre des orientations complexes pour atteindre la zone de soudure. En outre, la soudure peut être réalisée sans apport de matière supplémentaire, ce qui simplifie le procédé de soudage et le dispositif destiné au soudage. La soudure est alors formée par la fusion des matériaux constituants les contours de la bride 12 et du bouchon 10.

Il est à noter que la bride est soudée sur la virole avant le chargement du combustible, par conséquent son soudage sur la virole est beaucoup plus simple.

Le bouchon 10 forme une barrière étanche et permet de confiner le combustible usé dans le volume V délimité par la virole 2, le fond et le bouchon.

On peut prévoir, pour des raisons de sécurité, de charger l'étui avec le combustible usé sous eau en piscine, le bouchon étant alors soudé sur la bride 12 sous eau. Ce procédé de chargement implique que le volume V est rempli d'eau qu'il faut évacuer, ce volume ainsi que le combustible qu'il contient doit également être séché.

Comme on peut le voir sur la figure 2A, on prévoit alors de disposer dans l'étui un tube 21 destiné à la vidange de l'eau, ce tube comportant une première extrémité d'aspiration débouchant dans le fond de l'étui et une deuxième extrémité d'évacuation débouchant vers le bouchon 10, cette extrémité étant destinée à être raccordée à un premier raccord 22 d'évacuation porté par le bouchon, le raccord étant relié à un raccord 24 traversant le bouchon 10 Ce raccord peut également servir au séchage de l'étui. Le bouchon 10 comporte également un deuxième raccord 26 permettant l'échappement de l'air lors du séchage de l'étui et la pressurisation de l'étui si cela est requis.

Enfin, lorsque les différentes étapes de fermeture de l'étui sont terminées, ces premier 22, 24 et deuxième 26 raccords permettent de mesurer l'humidité régnant à l'intérieur de l'étui, ce qui permet de vérifier la tenue dans le temps de l'étui.

De manière particulièrement avantageuse et comme cela est représenté sur les figures 1 et 2B, l'étui comporte des moyens 28 permettant la manutention de l'étui sans manipuler le bouchon 10.

Les moyens 28 forment un couvercle fixé sur la virole, par soudage directement sur celle-ci, ce couvercle recouvrant le bouchon 10. Pour cela, le bouchon 10 est fixé dans la virole 2 suffisamment en retrait de l'extrémité libre de la virole 2, cette extrémité longitudinale libre recevant le couvercle 28.

Le couvercle 28 n'a pas pour fonction principale d'étanchéifier l'étui, mais de permettre la manipulation de l'étui, par exemple par un dispositif suspendu à un pont roulant. Pour cela, le couvercle 28 comporte un système de préhension 30 en saillie vers l'extérieur. Dans l'exemple représenté, ce système de préhension 30 est une pièce en saillie au centre du couvercle. On pourrait prévoir également de réaliser le système de préhension sous la forme d'un évidement.

Dans cet exemple avantageux, les fonctions d'étanchéité et de manipulation sont distinctes. Par conséquent, la fixation étanche du bouchon 1 sur la virole via la bride 12 n'a pas besoin d'offrir une grande résistance mécanique à la traction, et la fixation mécanique du couvercle 28 sur la virole 2 est, par contre prévue pour tenir aux efforts de traction lors du levage de l'étui et n'est pas conçu pour être étanche. Cette séparation des fonctions simplifie la réalisation de l'étui et sa surveillance.

Il est bien entendu que l'on pourrait prévoir, pour augmenter encore le niveau de sécurité du confinement offert par l'étui de rendre étanche la fixation du couvercle 28 sur la virole 2.

Il est à noter que, le couvercle étant fixé à l'extrémité longitudinale libre de la virole, sa fixation par soudure à la virole ne rencontre pas les mêmes difficultés que pour la fixation du bouchon 10 sur la virole. Cependant afin de simplifier le procédé complet, on peut prévoir de solidariser le couvercle à la virole de manière identique à celle utilisée pour le bouchon par un soudage sans fil. Pour cela, et comme on peut le voir sur la figure 2C, la périphérie radialement extérieure du couvercle est formée par un anneau 28.1 d'épaisseur sensiblement égale à celle de l'extrémité de la virole, ce qui permet la réalisation d'une soudure sans fil. Le couvercle 28 comporte également un épaulement annulaire 28.2 reposant sur une surface annulaire d'appui 29 ménagée dans la face intérieure de la virole. Grâce à cette conception du couvercle, le procédé de soudage du bouchon sur la bride et le procédé de soudage du couvercle sur la virole sont identiques et ne nécessitent pas de changement de matériel, le procédé complet est alors plus rapide.

En variante, on peut prévoir que la bride soit réalisée d'un seul tenant avec la virole, évitant ainsi une étape de soudage.

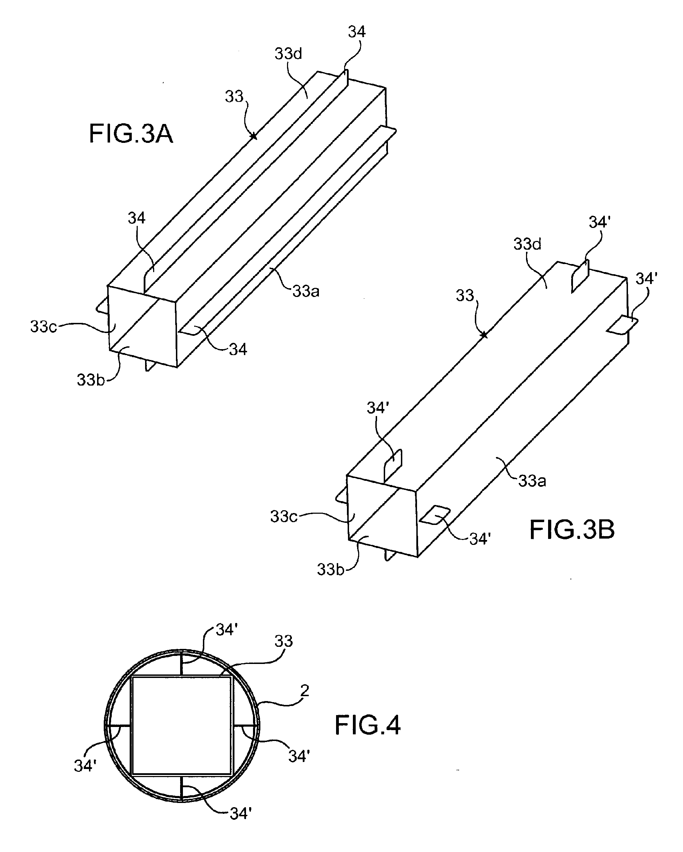

L'étui comporte également de manière particulièrement avantageuse, comme cela est représenté sur les figures 3A et 3B des moyens 32 pour maintenir le chargement disposé dans l'étui sensiblement au centre de celui-ci.

Ces moyens de calage 32 sont formés dans l'exemple représenté par un fourreau 33 à section carrée dont la dimension des diagonales est sensiblement égale au diamètre intérieur de l'étui, assurant une immobilisation du fourreau 33 dans l'étui. Le combustible usagé est disposé à l'intérieur du fourreau 33 qui le maintient latéralement. Le fourreau a une longueur sensiblement égale à celle du volume intérieur de l'étui.

De manière particulièrement avantageuse, le fourreau 33 comporte, en saillie de ses faces extérieures, des ailettes 34 de refroidissement facilitant l'évacuation de la chaleur libérée par le combustible vers l'extérieur de l'étui.

Sur la figure 3A, les ailettes 34 s'étendent sur toute la longueur du fourreau 33. Sur la figure 3B représentant une variante du moyen de calage, le fourreau 33 est équipé à chacune de ses extrémités longitudinales de quatre ailettes 34' de taille réduite, ne s'étendant que sur une partie limitée de la longueur du fourreau 33. Ce fourreau 33 est par exemple formé par quatre tôles 33a à 33b. Plusieurs ailettes 34 pourraient également être réparties sur toute la longueur du fourreau 33.

Sur la figure 4, on peut voir le fourreau 33 dans l'étui.

Il est bien entendu que le fourreau peut avoir une section différente, par exemple une section octogonale.

Ces moyens de calage sont avantageusement amovibles. Ils sont mis en place en fonction des besoins, notamment en fonction de la forme des étuis.

Nous allons maintenant décrire les étapes de chargement et de fermeture de l'étui selon la présente invention.

L'étui selon la présente invention est chargé avec du combustible nucléaire usagé.

Le bouchon 10 est ensuite mis en place dans la bride 12.

Des moyens de soudage (en pointillés sur la figure 2B) sont ensuite amenés à proximité du bouchon et de la bride et effectuent le soudage du bouchon et de la bride. Grâce à l'invention, les moyens de soudage peuvent être amenés sensiblement parallèlement à l'axe longitudinale X de l'étui, puisque la zone de soudage est facilement accessible.

Dans le cas où on prévoit un couvercle 28 de manipulation, on amène celui-ci sur l'extrémité longitudinale libre de l'étui et on soude celui-ci par exemple par les mêmes moyens.

L'étui est alors prêt à être manipulé.

Grâce à l'invention, on a réalisé un étui dont la fermeture étanche est facilitée.

Il est bien entendu qu'un étui dont le bouchon sert également de moyens de préhension ne sort pas du cadre de la présente invention.

## Revendications

1. Etui pour confiner de la matière nucléaire usagée comportant une virole (2) d'axe longitudinal (X) comportant une première extrémité longitudinale (4) obturée par un fond (8) et une deuxième extrémité longitudinale (6) libre par laquelle l'étui est destiné à être chargé, un bouchon (10) destiné à obturer la deuxième extrémité longitudinale (6) libre de manière étanche au moyen d'une soudure réalisée au niveau d'une zone de soudure, ladite zone de soudure étant décalée radialement vers l'intérieur de l'étui, par rapport à la face interne de la virole (2), **caractérisé en ce que** ledit étui comporte une bride (12) en saillie de la face intérieure de la virole (2) du côté de la deuxième extrémité longitudinale (6) libre, et **en ce que** le bouchon (10) a au moins un diamètre extérieur sensiblement égal à au moins un diamètre intérieur de la bride (12), ledit bouchon (10) étant destiné à être soudé sur ladite bride (12).

2. Etui selon la revendication 1, dans lequel la bride (12) est soudée sur la face intérieure de la virole (2).

3. Etui selon la revendication 2, dans lequel la bride comporte une première section de plus grand diamètre intérieur et une deuxième section de plus petit diamètre intérieur raccordées par une surface annulaire (16) formant un épaulement sensiblement orthogonal à l'axe longitudinal (X), le bouchon (10) comportant un profil extérieur correspondant au profil intérieur de la bride (12), de sorte que le bouchon (10) repose sur l'épaulement (16).

4. Etui selon la revendication 2 ou 3, comportant des moyens de manutention (28) de l'étui distincts du bouchon (10), lesdits moyens étant fixés à la virole (2) au niveau de l'extrémité longitudinale (6) libre de la virole (2), la bride (12) étant fixée dans la virole (2) en retrait de l'extrémité longitudinale (6) libre de la virole (2).

5. Etui selon la revendication 4, dans lequel les moyens de manutention (28) sont formés par un couvercle muni en son centre d'un élément de préhension.

6. Etui selon la revendication 5, dans lequel le couvercle comporte un rebord d'épaisseur proche de l'épaisseur de l'extrémité longitudinale libre de la virole de sorte à permettre une soudure du couvercle sur la virole sans apport de fil.

7. Etui selon l'une des revendications 1 à 6, comportant des moyens de calage (32) du chargement, lesdits moyens de calage (32) étant rapportés dans l'étui.

8. Etui selon la revendication 7, l'étui étant de section circulaire, les moyens de calage (32) étant formés par un fourreau (33) dont la longueur est sensiblement égale à celle de l'intérieur de l'étui et dont la section transversale est un carré, la longueur des diagonales dudit carré étant sensiblement égale au diamètre intérieur de l'étui.

9. Etui selon la revendication 8, dans lequel le fourreau (33) comporte des moyens (34) pour évacuer la chaleur émise par le chargement.

10. Etui selon la revendication 9, dans lequel les moyens d'évacuation (34) de la chaleur comportent des ailettes s'étendant longitudinalement au moins sur une partie des faces extérieures du fourreau (33) dans la direction de la plus grande dimension.

11. Etui selon l'une des revendications 1 à 10, dans lequel le bouchon comporte un premier (22, 24) et un deuxième raccord (26) permettant la vidange de l'étui, le balayage avec de l'air de l'intérieur de celui-ci et sa mise sous pression.

12. Etui selon la revendication 11, comportant un tuyau de vidange disposé à l'intérieur de l'étui, ledit tuyau comportant une première extrémité libre disposée dans le fond de l'étui et une deuxième extrémité raccordée à un des raccords (22) permettant l'aspiration de l'eau contenu dans l'étui.

13. Procédé de chargement et de fermeture d'un étui selon l'une des revendications précédentes, comportant les étapes :
- mise en place du chargement à l'intérieur de l'étui,
- mise en place du bouchon (10) dans la bride (12),
- soudage du bouchon (10) sur la bride (12) sans apport de matière.

14. Procédé de chargement et de fermeture selon la revendication 13, comportant l'étape ultérieure de mise en place des moyens de préhensions (28) sur l'extrémité longitudinale (6) libre de la virole (2) et soudage de ceux-ci sur la virole (2).

## Patentansprüche

1. Behälter, um benutztes nukleares Material einzuschließen, umfassend:
einen Mantel (2) mit einer Längsachse (X), der ein erstes Längsende (4) umfasst, das durch einen Boden (8) verschlossen ist, und ein zweites, freies Längsende (6) umfasst, durch welches der Behälter zu beladen ist, einen Verschluss (10), der dazu bestimmt ist, das zweite, freie Längsende (6) in dichter Weise vermittels einer Schweißstelle zu verschließen, die auf der Höhe von einem Schweiß-Bereich ausgeführt ist, wobei der Schweiß-Bereich in Bezug auf die Innenfläche des Mantels (2) radial zum Inneren des Behälters hin versetzt ist,
**dadurch gekennzeichnet, dass** der Behälter einen von der Innenfläche des Mantels (2) vorstehenden Flansch (12) auf der Seite von dem zweiten, freien Längsende (6) umfasst, **und dadurch, dass** der Verschluss (10) wenigstens einen Außendurchmesser aufweist, der im Wesentlichen gleich wenigstens einem Innendurchmesser von dem Flansch (12) ist, wobei der Verschluss (10) dazu bestimmt ist, auf den Flansch (12) geschweißt zu werden.

2. Behälter nach Anspruch 1, wobei der Flansch (12) auf die Innenfläche des Mantels (2) geschweißt ist.

3. Behälter nach Anspruch 2, wobei der Flansch einen ersten Abschnitt mit größerem Innendurchmesser und einen zweiten Abschnitt mit kleinerem Innendurchmesser umfasst, die miteinander durch eine ringförmige Fläche (16) verbunden sind, wodurch eine zur Längsachse (X) im Wesentlichen orthogonale Schulter gebildet wird, wobei der Verschluss (10) ein Außenprofil umfasst, das dem Innenprofil des Flansches (12) entspricht, so dass der Verschluss (10) auf der Schulter (16) ruht.

4. Behälter nach Anspruch 2 oder 3, umfassend von dem Verschluss (10) verschiedene Handhabungsmittel (28) für den Behälter, wobei die Mittel an dem Mantel (2) auf Höhe von dem freien Längsende (6) des Mantels (2) befestigt sind, wobei der Flansch (12) zurückgesetzt von dem freien Längsende (6) des Mantels (2) an dem Mantel (2) befestigt ist.

5. Behälter nach Anspruch 4, wobei die Handhabungsmittel (28) durch einen Deckel gebildet sind, der in seiner Mitte mit einem Griffelement ausgestattet ist.

6. Behälter nach Anspruch 5, wobei der Deckel einen Rand mit einer Dicke umfasst, die nahe an der Dicke von dem freien Längsende des Mantels liegt, so dass ein Schweißen des Deckels an den Mantel ohne Zufuhr von Schweißdraht ermöglicht wird.

7. Behälter nach einem der Ansprüche 1 bis 6, umfassend Fixiermittel (32) für die Beladung, wobei die Fixiermittel (32) an oder in dem Behälter angebracht sind.

8. Behälter nach Anspruch 7, wobei der Behälter einen kreisförmigen Querschnitt aufweist, wobei die Fixiermittel (32) durch eine Hülle (33) gebildet sind, deren Länge im Wesentlichen gleich derjenigen des Inneren des Behälters ist, und deren Querschnitt ein Quadrat ist, wobei die Länge der Diagonalen des Quadrats im Wesentlichen gleich dem Innendurchmesser des Behälters ist.

9. Behälter nach Anspruch 8, wobei die Hülle (33) Mittel (34) umfasst, um durch die Beladung abgegebene Wärme abzuführen.

10. Behälter nach Anspruch 9, wobei die Mittel zur Abführung von Wärme (34) Flügel oder Rippen umfassen, die sich longitudinal wenigstens über einen Teil der Außenflächen von der Hülle (33) in der Richtung der größten Abmessung erstrecken.

11. Behälter nach einem der Ansprüche 1 bis 10, wobei der Verschluss einen ersten (22, 24) und einen zweiten Anschluss (26) umfasst, was es ermöglicht, den Behälter zu entleeren, das Innere davon mit Luft durchzuspülen und ihn unter Druck zu setzen.

12. Behälter nach Anspruch 11, umfassend ein Entleerungsrohr, das im Inneren des Behälters angeordnet ist, wobei das Rohr ein erstes freies Ende umfasst, das auf dem Boden des Behälters angeordnet ist, und ein zweites Ende umfasst, das mit einem der Anschlüsse (22) verbunden ist, was es ermöglicht, in dem Behälter enthaltenes Wasser anzusaugen.

13. Verfahren zum Beladen und Verschließen eines Behälters nach einem der vorhergehenden Ansprüche, umfassend die Schritte:
- Positionieren der Beladung im Inneren des Behälters,
- Positionieren des Verschlusses (10) in dem Flansch (12),
- Schweißen des Verschlusses (10) an den Flansch (12) ohne Materialzufuhr.

14. Verfahren zum Beladen und Verschließen nach Anspruch 13, umfassend den nachträglichen Schritt, Griffmittel (28) an dem freien Längsende (6) des Mantels (2) zu positionieren und diese an den Mantel (2) zu schweißen.

## Claims

1. A container for confining spent nuclear fuel, comprising a sleeve (2) of longitudinal axis (X) comprising a first longitudinal end (4) closed by a base (8) and a second longitudinal free end (6) via which the container is designed to be loaded, a plug (10) designed to close the second longitudinal free end (6) tightly by means of a weld made at the level of a welding zone, said welding zone being offset radially towards the interior of the container, relative to the inner face of the sleeve (2),
**characterized in that** said container comprises a flange (12) projecting from the inner face of the sleeve (2) to the side of the second longitudinal free end (6), and **in that** the plug (10) has at least one external diameter substantially equal to at least one internal diameter of the flange (12), said plug (10) being designed to be welded on said flange (12).

2. The container as claimed in Claim 1, in which the flange (12) is welded on the inner face of the sleeve (2).

3. The container as claimed in Claim 2, in which the flange comprises a first section of larger internal diameter and a second section of smaller internal diameter connected by an annular surface (16) forming a shoulder substantially orthogonal to the longitudinal axis (X), the plug (10) comprising an external profile corresponding to the internal profile of the flange (12), such that the plug (10) rests on the shoulder (16).

4. The container as claimed in Claim 2 or 3, comprising handling means (28) of the container distinct from the plug (10), said means being fixed to the sleeve (2) at the level of the longitudinal free end (6) of the sleeve (2), the flange (12) being fixed in the sleeve (2) back from the longitudinal free end (6) of the sleeve (2).

5. The container as claimed in Claim 4, in which the handling means (28) are formed by a cover fitted in the centre with a gripping element.

6. The container as claimed in Claim 5, in which the cover comprises a rim of thickness close to the thickness of the longitudinal free end of the sleeve so as to enable welding of the cover on the sleeve without adding wire.

7. The container as claimed in any one of Claims 1 to 6, comprising wedging means (32) of loading, said wedging means (32) being mounted in the container.

8. The container as claimed in Claim 7, the container being circular in cross-section, the wedging means (32) being formed by a casing (33) whereof the length is substantially equal to that of the interior of the container and whereof the transversal cross-section is a square, the length of the diagonals of said square being substantially equal to the internal diameter of the container.

9. The container as claimed in Claim 8, in which the casing (33) comprises means (34) for evacuating heat emitted by loading.

10. The container as claimed in Claim 9, in which the heat evacuation means (34) comprise fins extending longitudinally at least on one part of the outer faces of the casing (33) in the direction of the largest dimension.

11. The container as claimed in any one of Claims 1 to 10, in which the plug comprises a first (22, 24) and a second connector (26) for draining the container, sweeping with air of the interior of the latter and its pressurising.

12. The container as claimed in Claim 11, comprising a discharge pipe arranged inside the container, said pipe comprising a first free end arranged in the base of the container and a second end connected to one of the connectors (22) for suctioning water contained in the container.

13. A process for loading and closing a container as claimed in any one of the preceding claims, comprising the steps of:
- placing the loading inside the container,
- placing the plug (10) in the flange (12),
- welding the plug (10) on the flange (12) without adding material.

14. A process for loading and closing, as claimed in Claim 13, comprising the subsequent step of placing handling means (28) on the longitudinal free end (6) of the sleeve (2) and welding the latter on the sleeve (2).
